(19)    **Europäisches Patentamt**

**European Patent Office**     (11) Veröffentlichungsnummer : **0 055 805**

**Office européen des brevets**           **B1**

(12)           **EUROPÄISCHE PATENTSCHRIFT**

(45) Veröffentlichungstag der Patentschrift :
17.07.85

(21) Anmeldenummer : 81108776.6

(22) Anmeldetag : 23.10.81

(51) Int. Cl.⁴ : **A 23 J   3/00**, A 23 C 21/04,
         **A 23 K   1/08**

(54) **Nahrungs- oder Futtermittel und Verfahren zu deren Herstellung.**

(30) Priorität : 10.12.80 DE 3046511

(43) Veröffentlichungstag der Anmeldung :
14.07.82 Patentblatt 82/28

(45) Bekanntmachung des Hinweises auf die Patenterteilung : 17.07.85 Patentblatt 85/29

(84) Benannte Vertragsstaaten :
AT BE CH DE FR GB IT LI LU NL SE

(56) Entgegenhaltungen :
FR-A- 1 531 378
GB-A- 1 507 380
US-A- 2 251 334

(73) Patentinhaber : Schanze, Rudolf
Friedenstrasse 43
D-8034 Unterpfaffenhofen (DE)

(72) Erfinder : Schanze, Rudolf
Friedenstrasse 43
D-8034 Unterpfaffenhofen (DE)

(74) Vertreter : Kraus, Walter, Dr. et al
Patentanwälte Kraus Weisert & Partner Thomas-Wimmer-Ring 15
D-8000 München 22 (DE)

EP 0 055 805 B1

0 055 805

**Beschreibung**

Die Erfindung betrifft ein Verfahren zur Herstellung von Nahrungs- oder Futtermitteln und die bei dem Verfahren erhaltenen Produkte.

Die Versorgung von Jungtiren und Leistungstieren mit hochwertigem Eiweiß ist heute vielfach nicht sichergestellt. Jungtiere werden normalerweise mit Muttermilch ernährt. Häufig steht jedoch Muttermilch nicht zur Verfügung und daher muß bei der Ernährung von Jungtieren auf andere Produkte zurückgegriffen werden.

Bischer wurde in solchen Fällen in der Regel auf Magermilchpulver zurückgegriffen, das hochwertig ist und einfach in trockene Dauerform gebracht werden kann und bei der Wiederauflösung mit Wasser rekonstituierte Magermilch ergibt.

Die Herstellung des Magermilchpulvers ist jedoch bedingt durch die Steigung der Ölpreise sehr teuer geworden, so daß die Verwendung von Magermilchpulver als Futterkomponente in vielen Fällen nicht mehr wirtschaftlich ist. Magermilch wird zunehmend auch für die menschliche Ernährung verwendet, so daß auch eine Verknappung an Magermilch auftritt. Auch andere, früher verwendete Futtermittel, sind durch die Steigung der Energiekosten so teuer geworden, daß ihre Verwendung nicht mehr wirtschaftlich ist.

In der DE-OS 27 10 554 wird ein Verfahren zur Herstellung von Albumin enthaltenden Nährmittelgemischen, insbesondere ein Zusatzfuttermittel, beschrieben, bei dem Blut in eine gebrauchsfähige und verkaufsfähige Form gebraucht wird. Gemäß diesem bekannten Verfahren wird der pH-Wert eines wäßrigen Mediums, das mindestens 6 % Albumin enthält, wie Blut oder Molke auf einen Wert von 9,6 bis 12,5 eingestellt, dann wird das Reaktionsgemisch erhitzt, so daß sich ein Gel bildet und das Gel wird isoliert. Das so erhaltene Gel kann dann als Zusatznährstoff für Pflanzen oder Tiere verwendet werden. Es kann auch zu einem teilchenförmigen Produkt getrocknet werden. Dieses bekannte Futtermittel besitzt den Nachteil, daß es von den Tieren nicht angenommen wird, da sein Geruch unangenehm ist. Außerdem ist das Gel nicht lange haltbar und die Herstellung eines teilchenförmigen festen Produktes aus dem Gel ist mit hohem Energieaufwand verbunden. Das gelartige Produkt läßt sich nicht oder nur sehr schlecht zu einem pulverförmigen Produkt trocknen.

Wie aus der DE-OS 27 10 554, Seite 5 hervorgeht, ist das Trocknen von Blut — das sich grundsätzlich gut als Tierfutter eignet — mit erheblichen Schwierigkeiten verbunden und bei den bekannten Verfahren zur Aufbereitung des Blutes werden in vielen Fällen die Nährstoffe vermindert und Bluteiweiß wird gebildet, welches für Tiere unverdaulich ist.

In der GB-A-1 507 380 wird ein Verfahren zur Herstellung von eiweißangereicherten Konzentraten beschrieben, bei dem man zu flüssigen Nachprodukten der Milchproteingewinnung ein eiweißhaltiges Produkt zusetzt, den pH-Wert auf einen Wert von maximal 6 einstellt, während einer Zeit von 1 Stunde rührt, wobei die Zugabe des eiweißhaltigen Produktes in einer Menge erfolgt, daß ein Trockengehalt von max. 65 % erhalten wird und man anschließend das erhaltene Produkt direkt der Endverwendung zuführt oder anschließend trocknet. Bei diesem bekannten Verfahren wird als Ausgangsmaterial ein Produkt verwendet, welches noch gerinnungsfähiges Milcheiweiß enthält. Dies folgt aus Patentanspruch 1, Zeile 20 und der Beschreibung, insbesondere Zeilen 32 bis 37 Seite 1, Zeilen 52 bis 54 und 62 bis 65 Seite 2 und den Beispielen. Bei diesem Verfahren ist es von wesentlicher Bedeutung, daß das Ausgangsmaterial noch gerinnungsfähiges Eiweiß enthält. Dieses Eiweiß wird ausgefällt und umhüllt dabei das pflanzliche und/oder mikrobielle Protein, das normalerweise von den Tieren wegen des schlechten Geschmacks nicht angenommen wird.

In der US-A-2 251 334 wird ein Verfahren zur Herstellung einer proteinenthaltenden Masse beschrieben, bei dem eine wäßrige Dispersion aus Milchprotein und Tierblut verwendet wird.

Der vorliegenden Erfindung liegt die Aufgabe zugrunde, ein Futter- und Nahrungsmittel zur Verfügung zu stellen, welches dem heute verwendeten Futtermittel, insbesondere dem Magermilchpulver äquivalent ist, und das auf wirtschafliche Weise hergestellt werden kann. Insbesondere soll das Konzentrat in Trockenform mit bekannten Verfahren der Sprühtrocknung im Turm oder über Walzentrocknung überführt werden können. Bei dem erfindungsgemäßen Konzentrat sollen auch solche Produkte verwendet werden, die normalerweise verworfen werden, da sie nur schwer aufzubereiten sind.

Gegenstand der Erfindung ist ein Verfahren zur Herstellung von Nahrungs- oder Futtermitteln, das dadurch gekennzeichnet ist, daß man zu flüssigen Nachprodukten der Milchzucker-, Milchproteingewinnung, inversen Osmose und/oder Elektrodialyse der Milchindustrie einzeln oder im Gemisch, welches einen Trockengehalt von 25 bis 75 Gew.-% aufweist, Eiweißhydrolisate, bearbeitete Schlachtabfälle, Lederabfälle, Abfälle der Fleisch- und/oder Fischindustrie, Peptone, Produkte aus Single-Cell-Proteinen oder autolysierte Hefen oder ihre Gemische zusetzt, den pH-Wert auf einen Wert von maximal 6 einstellt, intensiv während einer Zeit von mindestens 1 Stunde rührt, wobei die Zugabe des gennanten Produktes in einer solchen Menge erfolgt, daß ein Trockengehalt von max. 65 % erhalten wird, und man anschließend den pH-Wert der Reaktionsmasse auf 6,0 ± 0,5 durch Zugabe von Alkalilaugen oder Ammoniak einstellt und anschließend trocknet.

Erfindungsgemäß werden flüssige Nachprodukte der Milchzucker- und Milchproteingewinnung, der inversen Osmose und/oder Elektrolyse einzeln oder im Gemisch verwendet. Bevorzugt werden solche

2

Nachprodukte der Milchindustrie eingesetzt, die einen pH-Wert unter 6,0 aufweisen. Man kann auch Produkte verwenden, die einen niedrigeren pH-Wert aufweisen. Vorzugsweise liegt der pH-Wert im Bereich von 4,0 bis 6,0. Beispiele für solche Nachprodukte der Milchindustrie sind Permeate aus der Ultrafiltration, sogenannte Mutterlaugen aus der Herstellung von Lactose, die jedoch niedrige pH-Werte aufweisen und Molke und Molkenkonzentrate sowie Produkte aus Elektrodialyse.

Die Milchnachprodukte enthalten 25 bis 75 % Trockenmasse und bevorzugt einen Restgehalt an Lactose, organischen Säuren und Mineralstoffen und auch Restmilcheiweiß Nachprodukte, die Restmilcheiweiß enthalten, verwendet man bevorzugt.

Zu den Milchnachprodukten oder Milchkoppelprodukten gibt man Eiweißhydrolisate ; bearbeitete Schlachtabfälle, Lederabfälle, Abfälle der Fleich- und/oder Fischindustrie ; Peptone, die ebenfalls in flüssiger Form vorliegen ; künstlich gezüchtete Einzeller (single-cell-protein), die ebenfalls in konzentrierter flüssiger Form oder bereits als Trockensubstanz verwendet werden können oder autolysierte Hefen oder Gemische dieser Verbindungen.

Hydrolisate im Sinne des Verfahrens sind vorrangig Produkte aus der Spaltung von Protein bis herunter zu seinen Aminosaürebausteinen, wobei die Spaltung beliebig durch Säuren, Basen oder enzymatisch erfolgen kann. Solche Hydrolisate sind heute im Handel erhältlich.

Peptone sind höher- bis hochmolekulare, aber wasserlösliche Spaltprodukte von Eiweiß, bei denen lediglich ein kleinerer Teil der hochmolekularen Proteinausgangsstoffe bezüglich der Anzahl seiner Peptidbindungen gelöst wurde. Beide Substanzen gerinnen nicht, was für die Verwendung des Endprosdukts wesentlich ist, da die Endprodukte mehr oder weniger wasserlöslich sein sollen und keinen Bodensatz bilden sollen. Das erfindungsgemäße Produkt erfüllt diese Forderung.

Das Koppelprodukt der Milchindustrie, wie beispielsweise das Permeatkonzentrat, wird in einen Reaktor gegeben und dann wird die berechnete Menge an eiweißhaltigem Produkt, wie Blut oder Hydrolisat oder Einzellerprotein etc. oder Gemische davon zugegeben. Die Zugabe erfolgt unter intensivem Rühren, wobei der pH-Wert gleichzeitig so kontrolliert wird, daß der pH-Wert nicht über einen Wert von 6,0 steigt.

Das Reaktionsgemisch wird während einer Reaktionszeit von mindestens 60 Minuten intensiv gerührt, wobei der pH-Wert überwacht wird. Die Reaktionszeit muß mindestens 60 Minuten betragen ; sie kann aber auch mehrere Stunden betragen. Der pH-Wert wird gegebenenfalls durch Zugabe von Alkali, wie Natrium- und/oder Kalilauge, Calcium- und/oder Magnesiumoxid oder mit Ammoniak, einen Wert im Bereich von 4 bis 6, bevorzugt 5 bis 5,8, abgepuffert.

Die Reaktionstemperatur ist nicht kritisch. Im allgemeinen arbeitet man bei Zimmertemperatur. Man kann jedoch auch bei leicht erhöhter oder bei Temperaturen unter Zimmertemperatur arbeiten. Temperaturen im Bereich von 5 bis 50 °C können verwendet werden.

Gemäß einer bevorzugten Ausführungsform gibt man zu dem oben erhaltenen Gemenge noch Kohlehydrate und/oder Gummen. Als Kohlehydrate werden bevorzugt Kartoffelprodukte, wie Kartoffelstärke, Kartoffelmehl, Kartoffelflocken, Kartoffelschälabfälle oder ganze Kartoffeln, Getreidemehl und Getreidenachprodukte, wie von Reis, Mais, Gerste, Weizen, Hafer, Roggen, Hirse, Brotabfälle, wie Knäckebrotbruch, Cellulosen, wie Cellulose und Hemicellulose, zugegeben. Beispiele für Gummen, die auch teilweise als Harze bezeichnet werden, sind Gummi arabikum, Kirschgummi, Gummi caroides, Gummi Asa goetida, G. Benzoe Siam, G. Copal, G. Elemi, G. Galbanum, G. Guajaci, G. Gutti, G. Kino, G. Mastix, G. Myrrhae, G. Olibanum, G. Opoponax, G. Sandaracae, G. Sanguis Draconis und G. Styrax. Die Kohlehydrate oder Gummen werden in einer Menge von 0 bis 15 Gewichtsteilen, bevorzugt 3 bis 8 Gewichtsteilen, als Trockenmasse, bezogen auf 100 Gewichtsteile Trockenmasse, verwendet. Die Kohlehydrate oder Gummen werden zu dem Reaktionsgemisch bei einer Reaktionstemperatur innerhalb des oben angegebenen Bereichs und unter Rühren zugegeben. Die Zugabe von Kohlehydraten und/oder Gummen erfolgt bevorzugt dann, wenn man bei dem obigen Verfahren Reaktionsprodukte mit Trockengehalten im unteren Bereich erhält.

Nach Beendigung der Rührzeit kann das flüssige Reaktionsgemisch — sofern erforderlich — durch Destillation, bevorzugt Destillation im Vakuum, eingeengt und auf einen Trockengehalt von 35 bis 55 % Trockenmasse gebracht werden. Das Reaktionsgemisch kann aber auch über übliche Trockenvorrichtungen, wie einen Turm oder eine Walze, in eine trockene, feste Form überführt werden. Bezüglich der Endtrocknung stehen zwei Verfahren zur Verfügung. Einmal die Versprühung in gasförmiges Medium (Turmtrocknung), zum anderen die Beaufschlagung von Konvektionstrocknern (Walzentrocknung).

Die Versprühung ist für Produkte bevorzugt, von denen gewünscht wird, daß sie rekonstituierbar sind und nach Trocknung und Auflösung in Wasser in bodensatzfreie Dispersionen übergehen. Dies wird erreicht, wenn durch entsprechende Vorbehandlung auch die Aschenanteile in saure, wasserlösliche Salze überführt sind.

Die Walzentrocknung wird für Produkte bevorzugt, die sich nicht wieder auflösen müssen, sondern wo eine trokkene Anwendung in Frage kommt. Gegebenenfalls kann das getrocknete Produkt granuliert oder gemahlen oder zu Pellets verpreßt werden.

Nach Beendigung des Verfahrens werden überraschenderweise Endprodukte erhalten, die als hochwertige Eiweißprodukte in Futtermitteln, insbesondere als Milchaustauscher verwendet werden können.

Überraschenderweise sind die Produkte nicht mehr hygroskopisch, besitzen einen guten Geschmack

**0 055 805**

und ein weißes bis gelbliches Aussehen und sie sind in Wasser praktisch bodensatzfrei löslich.

Das erfindungsgemäße Produkt ist somit gegenüber den Produkten, die man aus den Einzelkomponenten erhält, wie gegenüber Blutmehl, getrocknetem Hydrolisat, Trockenmilchprodukten (neutralisierte Sauermolkenpulver, teilentzuckertes Molkenpulver) usw. vorteilhaft.

In der folgenden Tabelle I sind die Zusammensetzungen einiger, bei dem erfindungsgemäßen Verfahren eingesetzten Komponenten aufgeführt.


(Siehe Tabelle I, Seite 5 f.)

4

Tabelle I

Zusammensetzung der Nachprodukte der Milchindustrie und der eiweißhaltigen Produkte

| Art der Produkte | Trockenmasse in Flüssig-keit-% | Zusammensetzung der Trockenmasse | | | |
|---|---|---|---|---|---|
| | | RP-%[a] | Asche-% | Lactose-% | sonstige Stoffe |
| Rückstand aus Lactoseherstellung | 30-60 | 15-25 | 10-25 | 30-50 | 2-25 |
| Rückstand der Ultra-filtration (Permeat) | 5-25 30-50 | 5-10 | 3-15 | 70-90 | 0-10 |
| Filtrat aus der Ultrafiltration | 15-35 | 35-80 | 0-5 | 10-50 | 0-5 |
| Sonstige Rückstände | 5-35 | 5-15 | 5-30 | 5-40 | 0-35 |
| Tierisches Blut | 15-25 | 75-95 | 0-5 | | |
| Aufbereitetes tieri-sches Eiweiß | 45-75 | 80-100 | 0-8 | | |
| Peptone | 35-95 | 75-100 | 0-15 | | |
| Einzeller-Eiweiß | 50-95 | 50-80 | 2-15 | | |
| Hydrolisate | 35-75 | 75-95 | 2-15 | | |

a) RP = Restprotein

**0 055 805**

Aus der Tabelle ist erkennbar, daß man durch Mischen entsprechender Bestandteile Konzentrate mit beliebigem Eiweißgehalt herstellen kann. Der Anmelder hat überraschenderweise gefunden, daß der günstigste Bereich bezüglich der technisch praktischen Herstellung des Naßgutes in einem bestimmten Bereich liegt. Es ist erforderlich, das Milchnachprodukt und das flüssige oder feste eiweißhaltige Produkt in bestimmten Mengenverhältnissen zu verwenden, damit man ein Produkt erhält, das die gewünschten Eigenschaften aufweist.

Es werden die beiden wesentlichen Komponenten so eingesetzt, daß man ein Endprodukt erhält, welches, bezogen auf Trockenmasse,

1. einen Eiweißgehalt, bezogen auf die Trockenmasse im Endprodukt, von 25 bis 60 %, bevozugt 28 bis 55 %, mehr bevorzugt 30 bis 55 % ; und

2. einen Lactosegehalt einschließlich der Kohlehydratanteile in der Trockenmasse im Endprodukt von 15 bis 45 %, bevorzugt 20 bis 40 %, mehr bevorzugt 22,5 bis 37,5 %, besitzt.

Bei dem erfindungsgemäßen Verfahren kann man auch andere Zusatzstoffe, die Nahrungsstoffe oder Futtermittel sind, zu dem Reaktionsgemisch zugeben. Dies empfiehlt sich besonders dann, wenn man ein Produkt hat, welches sich schlecht trocknen läßt.

Für die Praxis hat es sich als zweckdienlich erwiesen, innerhalb des Gesamteiweißes von 100 % mindestens 35 bis 50 % aus Eiweiß der Milchnachprodukte zu decken und 50 bis maximal 65 % des Eiweißes aus den eiweißreichen Produkten zu decken. Damit können die vorzüglichen funktionellen Eigenschaften des nativen Milcheiweißes zur Unterstützung des technischen Prozesses der Endtrocknung und gleichzeitig zur Anhebung des Nährwertes des Endproduktes dienen.

Erfindungsgemäß wird bevorzugt ein eiweißangereichertes Konzentrat hergestellt, das, bezogen auf 100 Teile Trokkenmasse, 35 bis 85 Gew.-%, vorzugsweise 55 bis 85 Gew.-%, besonders bevorzugt 65 bis 85 Gew.-%, Feststoff, der aus dem flüssigen Nachprodukt der Milchzucker-, Milchproteingewinnung und/oder Elektrodialyse stammt, und 5 bis 65 Gew.-%, vorzugsweise 5 bis 45 Gew.-%, besonders bevorzugt 5 bis 25 Gew.-%, Feststoff, der aus dem eiweißhaltigen Produkt stammt, enthält. Das erfindungsgemäße eiweißangereicherte Konzentrat kann weiterhin 0 bis 15 Gew.-%, vorzugsweise 3 bis 8 Gew.-%, Feststoff, der aus den Kohlehydraten und/oder Gummen stammt, und 0 bis 10 Gew.-% Zusatzstoffe, wie sie üblicherweise in Futtermitteln verwendet werden, enthalten. Solche Zusatzstoffe sind beispielsweise Konservierungsmittel, Farbstoffe, Aromastoffe, Süßstoffe, Mineralien, Spurenelemente, Aminosäuren, Pharmazeutika, insbesondere Antibiotika, und/oder dergleichen.

Im folgenden werden einige Produkteformen für Eiweißkonzentrate aufgeführt.

Produktformeln für Eiweißkonzentrat

| Komponenten (RP%/TS) | auf Trockenmasse bezogene Anteile in % | |
| --- | --- | --- |
| | Sprühtrocknung | Walzentrocknung |
| **Beispiel A** | | |
| Rückstand aus Lactose-herstellung (20) | 83 | 78 |
| aufber.tier. Eiweiß und/oder Peptone, und/oder Hydtrolisate (95) | 17 | 17 |
| Guar/Johannisbrot, und/oder Alpha-Zellul.,und/oder Quellmehle/Stärken (-) | | 5 |
| | 100 | 100=RP= 31 - 33 % |
| **Beispiel B** | | |
| Rückstand aus Lactose-herstellung (20) | 65 | 60 |

6

Produktformeln für Eiweißkonzentrat

| Komponenten | auf Trockenmasse bezogene Anteile in % | |
|---|---|---|
| (RP%/TS) | Sprühtrocknung | Walzentrocknung |
| tier.Blut (80) und/oder Einzeller-Eiweiß (75) | 35 | 35 |
| Guar/Johannisbrot, und/oder Alpha-Zellul.,und/oder Quellmehle/Stärke | | 5 |
| | 100 | 100=RP= 38-40 % |

Beispiel C

| | | |
|---|---|---|
| Gemenge aus Rückstand aus Lactose, und/oder Filtrat, und/oder Permeat (Ø 15) | 75 | 75 |
| Gemenge aus tier.Blut,und/oder Hydrolisat,und/oder Pepton (Ø 75) | 25 | 17 |
| Guar, Johannisbrot,und/oder Alpha-Zellul.,und/oder Quellmehle | | 8 |
| | 100 | 100=RP= 25-30 % |

Beispiel D

| | | |
|---|---|---|
| Rückstand aus Lactoseherstellung (20) | 50 | 45 |
| Filtrat aus Ultrafiltration (65) | 20 | 20 |
| Hydrolisat (85) | 20 | 10 |
| Peptone, und/oder aufber.tier. Eiweiß (100) | 10 | 15 |
| Guar, Johannisbrot,und/oder Alpha-Zellul. | | 10 |
| | 100 | 100=RP= 50-46,5% |

Beispiel E

| | | |
|---|---|---|
| Permeat (8) | 50 | 45 |
| Rückstand aus Lactose (20) | 30 | 30 |
| Hydrolisat | 20 | 20 |
| Quellmehl und/oder Kartflocke (10) | | 5 |
| | 100 | 100=RP= 30-35 % |

**0 055 805**

Die folgenden Beispiele erläutern die Erfindung.

Allgemeine Verfahrensdurchführung

In einen Reaktor gibt man als Vorlage das Milchnachprodukt bei Zimmertemperatur. Dann wird die berechnete Menge an eiweißreichem Produkt unter Rühren zugegeben. Gleichzeitig wird der pH-Wert bestimmt. Man rührt mindestens eine Stunde, wobei der pH-Wert konstant gemessen wird und gegebenenfalls durch Zugabe von Natriumhydroxid erhöht wird.

Das erhaltene Endprodukt kann direkt verwendet werden oder es kann getrocknet werden.

In der nachfolgenden Tabelle II sind die Beispiele 1, 2, 3 und 4 tabellarisch zusammengefaßt.

Tabelle II

| Bei-spiel | Prozeßschritt | | Menge l | Gewicht kg | pH | Trockenmasse kg | in der Trockenmasse | | |
|---|---|---|---|---|---|---|---|---|---|
| | | | | | | | Protein %=kg | Asche %=kg | Restwas-ser %=kg |
| 1 | Vorlage: | Konzentrat aus Lac-toseherstellung 35%ig, 20-21% Roh-protein | 10000 | 11500 | 4,2 | 4025 | 825 | 965 | – |
| | Zugabe: | Tierblut, flüssig, 20%ig | 12950 | 13500 | 6,2 | 2700 | 2215 | 105 | |
| | vermischen, konzentrieren | | | | | | | | |
| | | Konzentrat, 50%ig als Endprodukt möglich | 11200 | 13450 | | 6725 | 3040 | 1070 | 6725 |
| | | Trocknung als End-produkt | | 7080 | 5,8 | 6725 | 43% | 15% | 4-5% |
| 2 | Vorlage: | Konzentrat aus Ultra-filtration, 30%ig, 10% Rohprotein (Permeat) | 10000 | 11200 | 5,5 | 3360 | 335 | 200 | – |
| | Zugabe: | Hydrolisat, Pepto-ne, flüssig, 70%ig = 70% Rohprotein | 975 | 1215 | 6,2 | 850 | 850 | – | |
| | vermischen, abwarten, trock-nen | | | | | | =1185 | 200 | – |
| | Trocknung als End-produkt | | | 4430 | 5,8 | 4210 | 28% | 4,8% | 4-5% |

| Bei-spiel | Prozeßschritt | | Menge l | Gewicht kg | pH | Trockenmasse kg | in der Trockenmasse | | |
|---|---|---|---|---|---|---|---|---|---|
| | | | | | | | Protein %=kg | Asche %=kg | Restwasser %=kg |
| 3 | Vorlage: | Konzentrat aus Koppelproduktmischung, 25%ig, 15% Rohprotein (Mutterlauge, Salzwasser ED, Sauermolken) | 10000 | 11000 | 4,8 | 2750 | 410 | 550 | – |
| | Zugabe: | Single-Cell-Proteine, trocken, 70% Protein, 10% Wasser | 2050 | 1850 | 6,5 | 1850 | 1435 | 125 | – |
| | | vermischen, abwarten, trocknen | | | | =4600 | =1845 | =675 | |
| | | Trocknung als Endprodukt | | 4845 | 5,7 | 4600 | 40% | 14–15% | 4–5% |
| 4 | Vorlage: | Konzentrat wie unter 1 | 10000 | 11500 | 4,2 | 4025 | 825 | 965 | – |
| | Zugabe: | Tierblut wie unter 1 | | 5000 | 6,2 | 1000 | 800 | 45 | |
| | | Hydrolisat, Peptone wie unter 2 | 975 | 1215 | 6,2 | 850 | 850 | – | |
| | | Single-Cell-Proteine wie unter 3 | | 360 | 6,5 | 325 | 250 | 20 | – |
| | | vermischen, abwarten, konzentrieren | | | | | | | |
| | | Konzentrat, 50%ig als Endprodukt | | 12400 | 5,7 | 6200 | 2725 | 1030 | 6200 |
| | | trocknen | | | | | | | |
| | | Trocknung als Endprodukt | | 6525 | 5,5 | 6200 | 41–42% | 15–16% | 4–5% |

**0 055 805**

**Patentansprüche**

1. Verfahren zur Herstellung von Nahrungs- oder Futtermitteln, dadurch gekennzeichnet, daß man zu flüssigen Nachprodukten der Milchzucker-, Milchproteingewinnung, inversen Osmose und/oder Elektrodialyse der Milchindustrie einzeln oder im Gemisch, welches einen Trockengehalt von 25 bis 75 Gew.-% aufweist, Eiweißhydrolisate, bearbeitete Schlachtabfälle, Lederabfälle, Abfälle der Fleisch- und/oder Fischindustrie, Peptone, Produkte aus Single-Cell-Proteinen oder autolysierte Hefen oder ihre Gemische zusetzt, den pH-Wert auf einen Wert von maximal 6 einstellt, intensiv während einer Zeit von mindestens 1 Stunde rührt, wobei die Zugabe des genannten Produktes in einer solchen Menge erfolgt, daß ein Trockengehalt von max. 65 % erhalten wird, und man anschließend den pH-Wert der Reaktionsmasse auf 6,0 ± 0,5 durch Zugabe von Alkalilaugen oder Ammoniak einstellt und anschließend trocknet.

2. Verfahren nach Anspruch 1, dadurch gekennzeichnet, daß man gegen Ende der Umsetzung Kohlehydrate und/oder Gummen zu dem Reaktionsgemisch zusetzt und noch weiterrührt, bis ein einheitliches Gemisch erhalten wird.

3. Verfahren nach Anspruch 1 oder 2, dadurch gekennzeichnet, daß man als flüssiges Nachprodukt der Milchzuckerindustrie Milchzuckermelasse bzw. Mutterlauge, der Milchindustrie Permeate aus der Ultrafiltration und/oder Molken verwendet.

4. Verfahren nach Anspruch 1, 2 oder 3, dadurch gekennzeichnet, daß man bei dem Vermischen des flüssigen Nachprodukts mit dem eiweißhaltigen Produkt einen pH-Wert von 4,0 bis 5,5 einstellt.

5. Verfahren nach mindestens einem der vorhergehenden Ansprüche, dadurch gekennzeichnet, daß man dem Reaktionsprodukt übliche Zusatzstoffe, wie Konservierungsmittel, Farbstoffe, Aromastoffe, Süßstoffe, Mineralien, Spurenelemente, Aminosäuren und/oder dergleichen oder ihre Gemische zusetzt.

6. Nahrungs- oder Futtermittel, dadurch gekennzeichnet, daß es nach einem der Ansprüche 1 bis 5 erhalten worden ist.

**Claims**

1. A process for producing foodstuffs or feedstuffs, characterized in that protein hydrolyzates, processed abattoir waste, leather waste, waste from the meat and/or fish industry, peptones, products of single-cell proteins or autolyzed yeasts or mixtures thereof are added to liquid by-products of lactose production, lactoprotein recovery, reverse osmosis and/or electrodialysis in the dairy industry either individually or in the form of a mixture having a dry matter content of from 25 to 75 % by weight, the pH-value is adjusted to at most pH 6, the mixture is stirred intensively for at least 1 hour, the above-mentioned product being added in such a quantity that a dry matter content of at most 65 % is obtained, the pH-value of the reaction mixture is then adjusted to 6.0 ± 0.5 by the addition of alkali hydroxides or ammonia and the product is dried.

2. A process as claimed in Claim 1, characterized in that carbohydrates and/or gums are added to the reaction mixture towards the end of the reaction and stirring is continued until a uniform mixture is obtained.

3. A process as claimed in Claim 1 or 2, characterized in that lactose molasses or mother liquor from the dairy industry, ultrafiltration permeates and/or whey is/are used as the liquid by-product of the lactose industry.

4. A process as claimed in Claim 1, 2 or 3, characterized in that a pH-value of from 4.0 to 5.5 is maintained during mixing of the liquid by-product with the protein-containing product.

5. A process as claimed in at least one of the preceding Claims, characterized in that standard additives, such as preservatives, dyes, flavorings, sweeteners, minerals, trace elements, amino acids and/or the like or mixtures thereof, are added to the reaction product.

6. A foodstuff or feedstuff obtained by the process claimed in any of Claims 1 to 5.

**Revendications**

1. Procédé de préparation d'un produit alimentaire ou d'un produit d'alimentation animale, caractérisé en ce que l'on ajoute à des produits secondaires liquides de l'extraction de lactose et de protéines du lait, d'osmose inverse et/ou d'électrodialyse de l'industrie laitière, séparément ou dans un mélange qui présente une teneur en matières sèches de 25 à 75 % en poids, des hydrolysats d'albumine, des déchets d'abattoirs traités, des déchets du travail des peaux, des déchets de l'industrie de la viande et/ou de l'industrie de transformation des produits de la pêche, des peptones, des produits de protéines « single-cell » ou de levures autolysées, ou leurs mélanges, en ce qu'on ajuste le pH à une valeur maximale de 6, en ce qu'on agite énergiquement pendant une durée d'au moins une heure, en ajoutant le produit indiqué dans une proportion calculée pour obtenir une teneur en matière sèche de 65 % au plus, en ce qu'on ajuste ensuite la valeur du pH de la masse réactionnelle à 6,0 ± 0,5 en ajoutant des lessives alcalines ou de l'ammoniac, et en ce que l'on sèche ensuite.

2. Procédé selon la revendication 1, caractérisé en ce que l'on ajoute, vers la fin de la réaction, des glucides et/ou des gommes au mélange réactionnel et en ce que l'on continue à agiter jusqu'à ce que l'on obtienne un mélange homogène.

3. Procédé selon la revendication 1 ou la revendication 2, caractérisé en ce que l'on utilise, comme produit secondaire liquide de l'industrie du lactose, de la mélasse de lactose ou des eaux-mères de l'industrie laitière, des perméats d'ultrafiltration et/ou des petits-laits.

4. Procédé selon la revendication 1, 2 ou 3, caractérisé en ce que lorsqu'on mélange le produit secondaire liquide avec le produit renfermant de l'albumine, on ajuste le pH à une valeur comprise entre 4,0 et 5,5.

5. Procédé selon l'une au moins des revendications précédentes, caractérisé en ce que l'on ajoute au produit de réaction des additifs usuels, tels que des agents de conservation, des colorants, des substances aromatiques, des substances sucrées, des minéraux, des oligo-éléments, des acides aminés et/ou des produits analogues, ou leurs mélanges.

6. Produit d'alimentation ou produit d'alimentation animale, caractérisé en ce qu'il a été obtenu selon l'une quelconque des revendications 1 à 5.